# EUROPEAN PATENT APPLICATION

(11) **EP 4 310 677 A1**
(43) Date of publication of application: **24.01.2024**
(21) Application number: 22857490.1
(22) Date of filing: 19.07.2022
(51) Int. Cl.: G06F 9/48

(54) **TASK SCHEDULING METHOD, GAME ENGINE, DEVICE AND STORAGE MEDIUM**

(30) Priority: 16.08.2021 CN 202110941214
(71) Applicant: Tencent Technology (Shenzhen) Company Limited, Shenzhen, Guangdong, 518057 (CN)
(72) Inventor: YU, Bowen, Shenzhen, Guangdong 518057 (CN); WANG, Wentao, Shenzhen, Guangdong 518057 (CN)
(74) Representative: Nederlandsch Octrooibureau
(86) International application number: PCT/CN2022/106410
(87) International publication number: WO 2023/020177

(57) **Abstract**

Disclosed in the embodiments of the present application are a task scheduling method, a game engine, a device and a storage medium. The method is applied to a game engine which comprises a task scheduling system and a plurality of task processing systems, wherein the plurality of task processing systems are respectively responsible for processing different tasks, each task processing system is configured with a corresponding task processing stage and a running association relationship in the task processing stage, and the running association relationship is used for representing a running dependency relationship between the task processing system and other task processing systems. The method comprises: when a game engine operates in a stage to be executed, specific task processing systems respectively generating tasks to be executed that the task processing systems are respectively responsible for processing, and transmitting said tasks to a task scheduling system; and the task scheduling system allocating processing threads in a CPU for said tasks on the basis of the load condition of the processing threads in the CPU and according to respective running association relationships of the specific task processing systems in the target stage to be executed. By means of the method, overall control for a parallel condition of a CPU can be realized.

## Description

This application claims priority to Chinese Patent Application No. 202110941214.9, entitled "METHOD FOR SCHEDULING TASK, SOFTWARE OPERATING PLATFORM, DEVICE, AND STORAGE MEDIUM" and filed with the China National Intellectual Property Administration on August 16, 2021, which is incorporated herein by reference in its entirety.

### FIELD OF THE TECHNOLOGY

The present disclosure relates to the technical field of computers, and in particular to a method for scheduling a task, a software operating platform, a device, and a storage medium.

### BACKGROUND OF THE DISCLOSURE

Generally, a software operating platform refers to a readily-complied, editable game system, or a core component of an interactive, real-time image application. The software operating platform is capable to provide various tools for compiling game programs, so that a game designer can produce a game more quickly. The software operating platform is usually capable to support functions such as performing physics computation, determining a light-shadow effect, detecting a collision, rendering a game element, generating a sound effect, and running a game script. When the software operating platform runs, the supported various functions coordinate to achieve normal operation of a game.

At present, most common software operating platforms run on a multi-core central processing unit (CPU), and it is usually difficult to implement an overall control on parallelism of the CPU. The parallelism of the processing unit is high in some periods while low in other periods, and thereby problems such as a drop in in a frame rate of a game and an increase in temperature of the CPU are likely to occur.

### SUMMARY

A method for scheduling a task, a software operating platform, a device, and a storage medium are provided according to embodiments of the present disclosure. An overall control on parallelism of a processing unit is implemented, a frame rate of a game is improved, and heating of a processing unit is reduced.

In a first aspect, a method for scheduling a task is provided according to embodiments of the present disclosure. The method is executable by a terminal device on which a software operating platform is capable to run, the software operating platform comprises a task scheduling system and task processing systems, the task processing systems are configured to process different tasks, respectively, each of the task processing systems operates in a corresponding task processing stage, and operating correlation of each of the task processing systems indicates dependency upon operation of another of the task processing systems. The method comprises: in response to operation of the software operating platform entering a target stage which is to be executed, generating, by each of one or more target task processing systems, a task which is to be processed by said target task processing system, and transmitting, by each of one or more target task processing systems, the task to the task scheduling system, where each of the one or more target task processing systems is one of the task processing systems of which the task processing stage comprises the target stage; and allocating, by the task scheduling system, one or more of processing threads in a processing unit to the task transmitted from each of the one or more target task processing systems based on a load on each of the processing threads and the operating correlation of each of the one or more target task processing systems in the target stage.

In a second aspect, a software operating platform is provided according to embodiments of the present disclosure. The software operating platform is configured to run on a terminal device and comprises a task scheduling system and task processing systems, the task processing systems are configured to process different tasks, respectively, each of the task processing systems operates in a corresponding task processing stage, and operating correlation of each of the task processing systems indicates dependency upon operation of another of the task processing systems. Each of the task processing systems is configured to generate a task to be processed by said task processing system and transmit the task to the task scheduling system, in response to operation of the software operating platform entering the task processing stage corresponding to said task processing system. The task scheduling system is configured to allocate one or more of processing threads in a processing unit to the task transmitted from each of one or more target task processing systems based on a load on each of the processing threads and the operating correlation of each of the one or more target task processing systems in a stage which is to be executed, in response to operation of the software operating platform entering the target stage, where each of the one or more target task processing systems is one of the task processing systems of which the task processing stage comprises the target stage.

In a third aspect, a device is provided according to an embodiment of the present disclosure. The device comprises a processor and a memory, the memory stores a computer program, and the processor is configured to execute the computer program to implement the method in the first aspect.

In a fourth aspect, a computer-readable storage medium is provided according to an embodiment of the present disclosure. The computer-readable storage medium stores a computer program, and the computer program is configured to implement the method in the first aspect.

In a fifth aspect, a computer program product or a computer program is provided according to an embodiment of the present disclosure. The computer program product or the computer program comprises computer instructions stored in a computer-readable storage medium, and a processor of a computer device when reading the computer instructions from the computer-readable storage medium and executing the computer instructions causes the computer device to perform the method in the first aspect.

Technical solutions according to foregoing embodiments of the present disclosure have following advantages.

The method for scheduling the task provides a means of scheduling processing resources in a game-engine level. That is, for each task processing stage involved in operation of a game, correlation among the tasks which the software operating platform generates in such task processing stage is comprehensively considered, and accordingly the processing resources are allocated to the tasks in a reasonable manner. The method according to embodiments of the present disclosure is applicable to software operating platforms constructed based on the entity-component-system (ECS) architecture. In these software operating platforms, processing logics in a game are decoupled, and different tasks are executed by independent task processing systems, respectively. Herein each task processing system in the software operating platform is configured with the task processing stage, to which such task processing system is applicable, and the operating correlation in the task processing stage. Moreover, the additional task scheduling system is provided for schedule processing resources globally in the software operating platform. In response to operation of the software operating platform entering a certain task processing stage, e.g., the target stage which is to be executed, the task scheduling system allocates the one or more processing threads in the processing unit to the task(s), which are generated by the target task processing system (s) applicable to such stage, according to the operating correlation(s) of the target task processing system(s), thereby implementing scheduling processing resources in the game-engine level. Thereby, the dependency between operation of one task processing system and operation of other task processing system(s) is comprehensively considered in the software operating platform to allocate processing resources, which implements the overall control on processing unit parallelism. The frame rate of the game is improved, and heating of the processing unit is reduced.

### BRIEF DESCRIPTION OF THE DRAWINGS

Figure 1 is a schematic diagram of an application scenario of a method for scheduling a task according to an embodiment of the present disclosure.
Figure 2 is a schematic diagram of a working principle of a software operating platform according to an embodiment of the present disclosure.
Figure 3 is a schematic diagram of a sequence of executing a pre-update stage, an update stage and a post-update stage according to an embodiment of the present disclosure.
Figure 4 is a schematic flowchart of a method for scheduling a task according to an embodiment of the present disclosure.
Figure 5 is a schematic diagram of an execution process of a task scheduling system according to an embodiment of the present disclosure.
Figure 6 is a schematic diagram of occupancy of processing resources of a processing unit when a software operating platform runs according to a method for scheduling a task according to an embodiment of the present disclosure.
Figure 7 is a schematic structural diagram of a software operating platform according to an embodiment of the present disclosure.
Figure 8 is a schematic structural diagram of a terminal device according to an embodiment of the present disclosure.

### DESCRIPTION OF EMBODIMENTS

Hereinafter technical solutions in embodiments of the present disclosure are described clearly and completely in conjunction with the drawings in embodiments of the present closure, in order to facilitate those skilled in the art understanding the technical solutions better. Apparently, the described embodiments are only some rather than all of the embodiments of the present disclosure. Any other embodiments obtained based on the embodiments of the present disclosure by those skilled in the art without any creative effort fall within the scope of protection of the present disclosure.

In the specification, claims, and drawings of the present disclosure, the terms "first", "second", "third", "fourth", and the like (if any) are intended for distinguishing similar objects, and do not necessarily indicate a specific order or sequence. Objects described in such a manner are interchangeable where appropriate, so that embodiments of the present disclosure may be implemented in an order other than what is illustrated or described herein. Moreover, the terms "include", "contain", and any other variants are intended for covering non-exclusive inclusion. For example, a process, a method, a system, a product, or a device, which comprises a series of steps or units, is not necessarily limited to those expressly listed steps or units, but may comprises another step or unit which is not expressly listed or which is inherent to such process, method, system, product, or device.

In conventional technology, running of a software operating platform (e.g., a game engine) usually concerns scheduling processing resources merely on a task level. That is, the processing resources are only scheduled among sub-tasks of a currently executed task, rather than scheduled globally with respect to overall operation of the software operating platform. Hence, an overall control on processing unit parallelism cannot be realized, and problems such as a drop in a frame rate of a game and an increase in a temperature of a processing unit (e.g., a CPU, a GPU, or another processor) are likely to occur.

In view of the above issues, a method for scheduling a task is provided according to embodiments of the present disclosure. Accordingly, the overall control on parallelism of a processing unit can be implemented, hence a frame rate of a game is improved, and heating of a processing unit is reduced.

Illustratively, the method for scheduling the task is applied to a software operating platform (e.g., a game engine) based on entity-component-system (ECS) architecture. The software operating platform comprises a task scheduling system and task processing systems. The task processing systems are configured to process different tasks, respectively. Each of the task processing systems operates in a corresponding task processing stage and has operating correlation in the corresponding task processing stage. The operating correlation indicates dependency upon operation of another of the task processing systems. In response to operation of the software operating platform entering a target stage which is to be executed, each target task processing system generates a task which is to be processed by such target task processing system, and transmits the task to the task scheduling system. Here the target task processing system refers to the task processing system of which the task processing stage comprises the target stage to be executed. The task scheduling system allocates one or more of processing threads in a processing unit to the task transmitted from each target task processing system based on a load on each processing thread and the operating correlation of each target task processing system.

The method for scheduling the task provides a means of scheduling processing resources in a game-engine level. That is, for each task processing stage involved in operation of a game, correlation among the tasks which the software operating platform generates in such task processing stage is comprehensively considered, and accordingly the processing resources are allocated to the tasks in a reasonable manner. The method according to embodiments of the present disclosure is applicable to software operating platforms constructed based on the entity-component-system (ECS) architecture. In these software operating platforms, processing logics in a game are decoupled, and different tasks are executed by independent task processing systems, respectively. Herein each task processing system in the software operating platform is configured with the task processing stage, to which such task processing system is applicable, and the operating correlation in the task processing stage. Moreover, the additional task scheduling system is provided for schedule processing resources globally in the software operating platform. In response to operation of the software operating platform entering a certain task processing stage, e.g., the target stage which is to be executed, the task scheduling system allocates the one or more processing threads in the processing unit to the task(s), which are generated by the target task processing system (s) applicable to such stage, according to the operating correlation(s) of the target task processing system(s), thereby implementing scheduling processing resources in the game-engine level. Thereby, the dependency between operation of one task processing system and operation of other task processing system(s) is comprehensively considered in the software operating platform to allocate processing resources, which implements the overall control on processing unit parallelism. The frame rate of the game is improved, and heating of the processing unit is reduced.

Herein the method for scheduling the task is applicable to a terminal device on which the software operating platform is capable to run. Specifically, the terminal device may be a smart phone, a computer, a tablet computer, a personal digital assistant (PDA), and a vehicle-mounted terminal, etc. A specific form of the terminal device is not limited herein.

In order to facilitate understanding of the method, hereinafter an application scenario for the method is illustrated as an example.

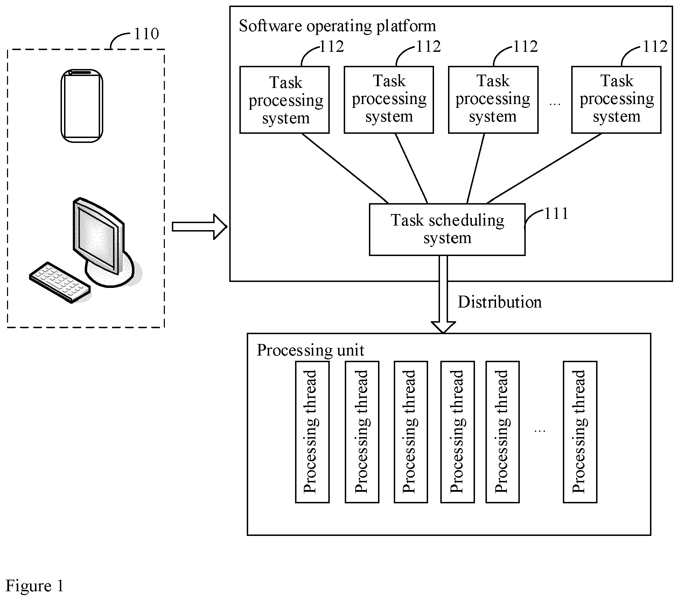

Reference is made to Figure 1, which is a schematic diagram of an application scenario of a method for scheduling a task according to an embodiment of the present disclosure. As shown in Figure 1, the application scenario comprises a terminal device 110, which may be a device on which a game application is capable to run, such as a smart phone and a computer. The terminal device 110 as shown in Figure 1 is merely an example. The game application runs in the terminal device 110. When the game application is running, various components in the software operating platform coordinate to implement various functions of the game application.

The software operating platform of the game application running in the terminal device 110 comprises a task scheduling system 111 and multiple task processing systems 112. The task scheduling system 111 is configured to allocate processing thread(s) in a processing unit to a task generated by each task processing system 112 in the software operating platform, during operation of the software operating platform. The task processing system 112 is configured to generate the tasks to be processed by itself during operation of the software operating platform. Different tasks are to be processed by different task processing systems 112. In embodiments of the present disclosure (including the embodiments of both the claims and the specification), the software operating platform of the game application running in the terminal device 110 may be a software operating platform based on the ECS architecture.

Herein when being registered in the software operating platform, the task processing system 112 needs to be configured with a task processing stage to which it is applicable, and such task processing stage corresponds to the task processing system 112. As an example, the task processing stages are divided based on a process of handling a game frame. For example, processing on the game frame is divided into a pre-update (PreUpdate) stage, an update (Update) stage and a post-update (PostUpdate) stage. Correspondingly, when being registered in the software operating platform, the task processing system 112 may be determined to be applicable to one or more among the pre-update stage, the update stage, and the post-update stage. In addition, when being registered in the software operating platform, the task processing system 112 needs to be configured with its operating correlation in the corresponding task processing stage. The operating correlation is configured to indicate dependency of the task processing system 112 upon operation of another task processing system 112 in the software operating platform. For example, operation of a task processing system for executing a rendering task depends on a processing result of another task processing system for executing a physics-computation task. Accordingly, when being registered in the software operating platform, the task processing system for executing the rendering task is configured with its operating correlation based on such operation relationship.

In actual running of the game application, each target task processing system generates a task to be processed by such target task processing system and transmits the generated task to the task scheduling system 111 in response to operation of the software operating platform entering a target stage which is to be executed (i.e., a pending stage). Each target task processing system is the task processing systems 112 of which the task processing stage is the pending stage. For example, in response to operation of the software operating platform entering the pre-update stage (which serves as the pending stage) of a certain game frame, the task processing system(s), each of which the task processing stage is the pre-update stage, in the software operating platform serve as the target task processing system.

The task scheduling system 111 receives the task transmitted from each target task processing system, and allocates processing thread(s) in a processing unit to the task based on a load on each of the processing threads, which are configured to support operation of the game application in the terminal device 110, and operating correlation of each target task processing system in the pending stage. In a case that the processing unit supporting operation of the game application is a homogeneous multi-core processing unit, the task scheduling system 111 allocates the processing thread(s) in the processing unit to the task according to a principle of balancing loads among the processing threads. In a case that the processing unit supporting operation of the game application is a heterogeneous multi-core processing unit, the task scheduling system 111 allocates the processing thread(s) in the processing unit to the task based on a data processing capability of each core in the processing unit.

The application scenario as shown in Figure 1 is merely exemplary. In practice, the method for scheduling the task may be applied to other scenarios. The application scenario applicable to the method for scheduling the task is not limited herein.

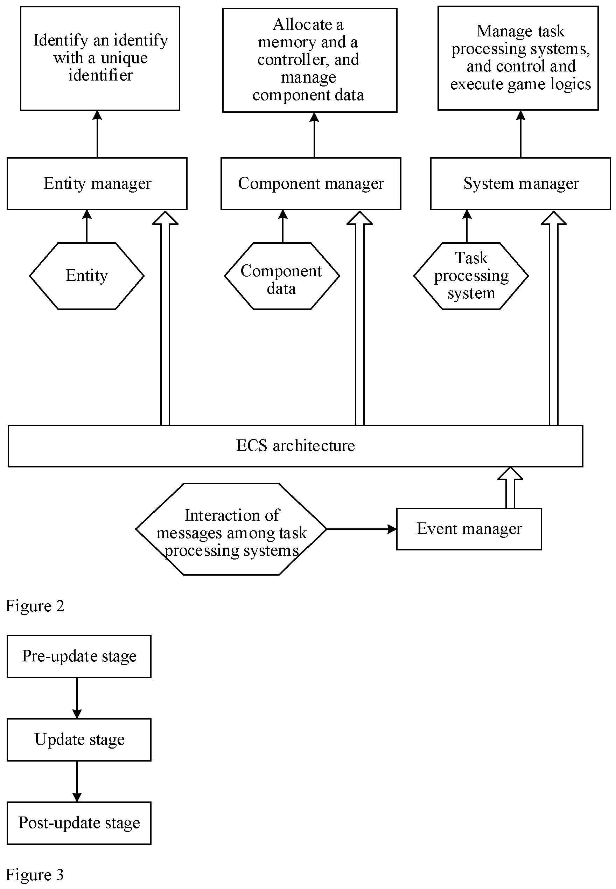

In order to facilitate understanding of the method according to embodiments of the present disclosure, hereinafter the software operating platform to which the method for scheduling the task is applicable is illustrated before the method is illustrated. Reference is made to Figure 2, which is a schematic diagram of a working principle of a software operating platform to which a method for scheduling a task is applicable according to an embodiment of the present disclosure.

As shown in Figure 2, the software operating platform applicable is based on the ECS architecture, of which a pattern follows a composition-over-inheritance principle. In the ECS architecture, each basic unit of a game is regarded as an entity. Herein the basic unit of the game may refer to each independent virtual element in the game. The virtual elements may be various elements that may appear in a game world, such as a virtual role, a virtual item, and a virtual decorative element. Each entity has at least one piece of component data. Each piece of component data is essentially functional attribute data of the virtual element corresponding to the entity to which the component data belongs. Generally, the component data merely includes data describing a functional attribute, and does not include any data concerning method logic. A system in the ECS architecture, i.e., the task processing system in embodiments of the present disclosure, is a tool for manipulating the virtual element corresponding to the entity through the component data of such entity. The system only has g actions and does not have status data.

The entity in the ECS architecture is actually a conceptual definition, which refers to the virtual element existing in a game, and has at least one piece of component data. In order to distinguish different virtual elements in the game, a unique identifier (an identity document, ID) is allocated to each entity in a code level, and all pieces of component data of such entity is further labelled by the corresponding ID to the entity, so that ownership between the component data and the entity is clarified. As shown in Figure 2, an entity manage is usually configured to manage the entities in the software operating platform and allocate the foregoing ID.

The entity in the ECS architecture is a set of component data, and hence the component data in the entity can be edited conveniently and dynamically when the software operating platform runs. For example, a new piece of component data is added into the entity, or a piece of component data is removed from the entity. As an example, when a virtual role controlled by a player is immobilized for some reason, the software operating platform may simply delete a piece of component data, which describes a moving capability, from the entity corresponding to the virtual role. Thereby, an effect of immobilizing the virtual role is achieved.

The component data in the ECS architecture is functional attribute data of the virtual element corresponding to the entity to which the component data belongs. The component data is merely configured to store a status, and does not represent any behavior. The component data in the entity may describe a function of the virtual element corresponding to the entity. As an example, an entity having a piece of positional component data indicates that the virtual element corresponding to the entity occupies a certain region/position in a game world. As another example, an entity having a piece of component data related to a moving function indicates that the virtual element corresponding to the entity is capable to move. As shown in Figure 2, a component manager is usually configured to manage the component data of the entities in the software operating platform. The component manager may allocate a memory and a controller to the component data, and manage all component data in the software operating platform.

The system (i.e., the task processing system herein) in the ECS architecture is a tool for executing a game logic. The system is capable to manipulate an entity having component data. The system is merely capable to execute an action, and is not capable to store any status data. In the ECS architecture, various game logics which can be implemented in the game are decoupled and allocated to different task processing systems, such that the various game logics can be separately implemented. That is, different task processing systems are configured to execute different game logics. When executing a corresponding task, the task processing system traverses the component data of all entities in the software operating platform, determines an entity related to the to-be-executed task, such that the corresponding task is executed based on the component data of the determined entity. For example, the task processing system for implementing a moving function may traverse all entities in the software operating platform to find an entity having a piece of component data related to the moving function, and then control a virtual element corresponding to the entity to move through such piece of component data. As shown in Figure 2, a system manager is generally configured to manage the task processing systems in the software operating platform. The system manager is capable to control the task processing systems to execute corresponding game logics, and manipulate virtual elements in the game through the component data of the entities. In addition, the software operating platform may further implement interaction of messages among the task processing systems via an event manager.

Herein a task scheduling system is added on a basis of a software operating platform having the foregoing ECS architecture, and the task scheduling system is configured to schedule processing resources among tasks generated during running of the software operating platform. Specific operation of the task scheduling system is described in detail in following method embodiments.

In addition, the task processing system in the software operating platform is further configured with a task processing stage and operating correlation in the corresponding task processing stages on the basis of the software operating platform based on the foregoing ECS architecture. The operating correlation is configured to indicate dependency of the task processing system upon operation of another task processing system in the software operating platform.

In embodiments of the present disclosure (including the embodiments of both the claims and the specification), processing in the software operating platform may be divided into multiple task processing stages according to an actual operation process of the software operating platform. When the task processing system is registered in the software operating platform, a task processing stage in which the task processing system can process its task is determined, and serves as the task processing stage corresponding to the task processing system.

As an example, the task processing stages may be delimited according to a process of handling a game frame, and comprise a pre-update stage, an update stage, and a post-update stage which correspond to the game frame. In the pre-update stage, a task for preparing updating the game frame is executed. In the update stage, a task for updating the game frame is executed. In the post-update stage, a task of finishing operation required after updating the game frame is executed.

In normal operation of a game, the software operating platform usually executes related tasks in units of game frames. Hence, herein a process of handing a game frame may be divided into the pre-update stage, the update stage, and the post-update stage. A sequence of executing the three stages is as shown in Figure 3, i.e., the pre-update stage is executed first, then the update stage is executed, and finally the post-update stage is executed.

In the pre-update stage corresponding to the game frame, the software operating platform executes a task of preparation required for updating the game frame. For example, the task processing system for executing script logic in the software operating platform may trigger updating a position of an object, trigger playback of a specific animation effect, and the like, and the task processing system for executing a physics-computation task in the software operating platform may calculate a motion parameter of the virtual element and the like. In the update stage corresponding to the game frame, the software operating platform executes a task of updating the game frame. For example, the task processing system for executing a rendering task in the software operating platform may render a virtual element and the like. In the post-update stage corresponding to the game frame, the software operating platform executes a task of fishing operation required after updating the game frame. For example, the task processing system for executing the script logic in the software operating platform may perform statistics on relevant data in the game frame and the like.

Herein the task processing stages may be delimited as the pre-update stage, the update stage, and the post-update stage. In such case, when being registered in the software operating platform, the task processing system is configured with the task processing stage according to when the task processing system processes its task. For example, the task processing system for executing the rendering task is configured with the update stage as its corresponding task processing stage, the task processing system for executing the physics-computation task is configured with the pre-update stage as its corresponding task processing stage, and the task processing system for executing the script logic is configured with the pre-update stage and the post-update stage as its corresponding task processing stage.

One task processing system may be configured with one or more task processing stages according to when the task processing system processes it task. A quantity of task processing stages corresponding to one task processing system is not limited herein.

Herein the task processing stages are delimited according to the process of handling the game frame, and accordingly the task processing systems are configured with respective task processing stages. Thereby, it is ensured that the task processing stages are reasonably set for the task processing systems, and a good basis is provided for setting operating correlations for the task processing systems. Specific timing of applying the operating correlations are clarified.

Herein the task processing system is further configured with operating correlation besides the task processing stages. The operating correlation is capable to indicate dependency of the task processing system upon operation of another task processing system in the software operating platform. As an example, in the task processing stage corresponding to task processing system A, task processing system A needs to process its task depending on a processing result of task processing system B. In such case, task processing system A may be configured with the operating correlation indicating that task processing system A needs to process its task depending on the processing result of task processing system B. Similarly, each task processing system is configured with its operating correlation in the corresponding task processing stage. Thereby, the task scheduling system can allocate processing threads to the tasks, which are generated by each task processing system in their corresponding task processing stages, according to the operating correlations.

There may be no dependency between operation of a certain task processing system and operation of any other task processing system in the corresponding task processing stage. That is, such task processing system is capable to process its task independently without depending on a processing result of any other task processing system. In such case, the task processing system may be configured with the operating correlation indicating that it does not depend on any other task processing system. The operating correlation for the task processing system is not specifically limited herein.

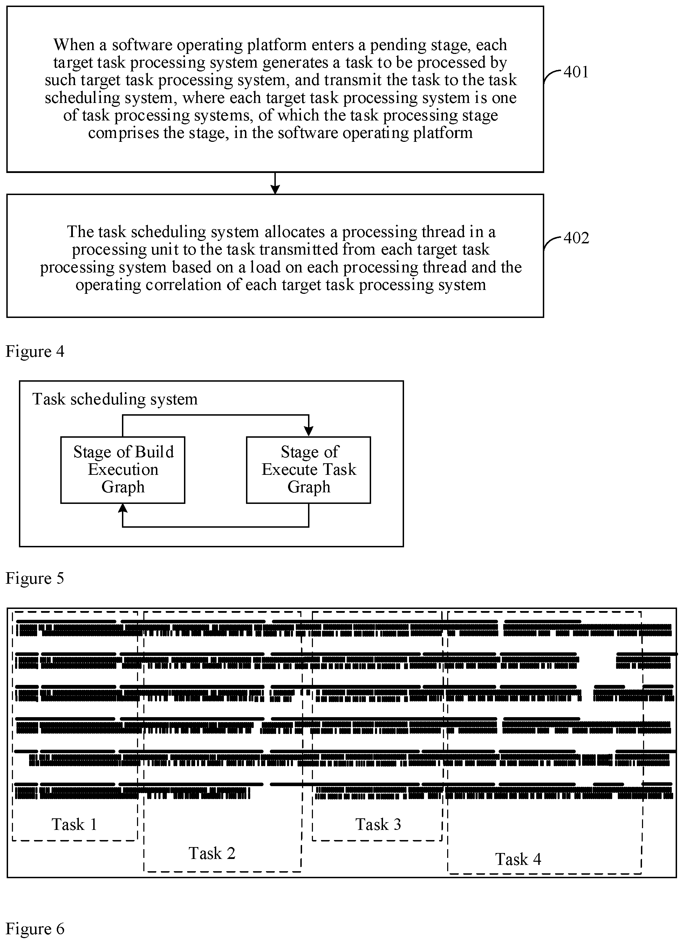

After introducing the applicable software operating platform and basic information set for the task processing systems in the software operating platform, hereinafter a method for scheduling a task according to an embodiment of the present disclosure is described in detail. Reference is made to Figure 4, which is a schematic flowchart of a method for scheduling a task according to an embodiment of the present disclosure. As shown in Figure 4, the method comprises following steps 401 and 402.

In step 401, when a software operating platform enters a pending stage, each target task processing system generates a task to be processed by such target task processing system, and transmit the task to the task scheduling system, where each target task processing system is one of task processing systems, of which the task processing stage comprises the target stage, in the software operating platform.

During operation of a game, each target task processing system in the software operating platform generates the respective task to be processed by such target task processing system and transmits the tasks to the task scheduling system in the software operating platform, in response to operation of the software operating platform entering the pending stage. Herein the target task processing system refers to a task processing system which is configured with a task processing stage comprising the pending stage in the software operating platform.

As an example, it is assumed that the task processing stages are delimited according to a processing of handling a game frame, and comprises a pre-update stage, an update stage and a post-update stage. In response to operation of the software operating platform entering the pre-update stage corresponding to a certain game frame, i.e., enters a target stage for executing a task of preparation required for updating the certain game frame, the task processing system(s) of which the task processing stage(s) comprise the pre-update stage in the software operating platform all serve as the target task processing system(s). At such time, each target task processing system needs to generate the correspondingly task to be processed by it, and transmit the generated task to the task scheduling system. For example, the task processing systems of which the task processing stages comprise the pre-update stage in the software operating platform comprises task processing system A, task processing system B, and task processing system C. In response to operation of the software operating platform entering the pre-update stage corresponding to a certain game frame, task processing systems A, B, and C serve as the target task processing systems, and generate task a, task b, and task c, respectively. Task processing system A transmits task a to the task scheduling system, task processing system B transmits task b to the task scheduling system, and task processing system C transmits task c to the task scheduling system.

In practice, there may be one or more target task processing systems to which the pending stage is applicable. A quantity of the target task processing systems in the pending stage is not limited herein.

In embodiments of the present disclosure (including the embodiments of both the claims and the specification), application programming interfaces (APIs) are provided as convenience for the task processing systems, so that the task processing systems may transmit their generated tasks to the task scheduling system via the APIs. That is, after generating the respective task, each target task processing systems may transmit the generated task to the task scheduling system via the API(s).

Herein the APIs for communication between the task processing systems to the task scheduling system are further provided on a basis of the added task scheduling system in the software operating platform. As an example, respective APIs may be configured for the task processing systems in the software operating platform, and the API corresponding to each task processing system is dedicated to support communication between such task processing system and the task scheduling system. Alternatively, one API may be configured for multiple task processing systems in the software operating platform, and the API can support communication between these task processing systems and the task scheduling system. A manner of configuring the API is not limited herein.

After the APIs are configured for the task processing systems in the software operating platform, the task processing systems may transmit the to-be-processed tasks to the task scheduling system via the APIs once generating the tasks. Hence, communications between the task processing systems and the task scheduling system are facilitated. Each task processing system transmits its generated task generated to the task scheduling system via API without referring to complex dependency between the task processing system and other task processing system(s).

In step 402, the task scheduling system allocates a processing thread in a processing unit to the task transmitted from each target task processing system based on a load on each processing thread and the operating correlation of each target task processing system.

After receiving the task transmitted from each target task processing system, the task scheduling system allocates the processing thread(s) in the processing unit to the task based on a current load on each processing thread in the processing unit, which supports operations of the game, and the operating correlation of each target task processing system in the pending stage.

As an example, it is assumed that the task scheduling system receives task a, task b and task c transmitted from task processing system A, task processing system B, and task processing system C, respectively. The task scheduling system allocates processing threads to task a, task b, and task c based on a load of each processing thread in the processing unit and the operating correlation of task processing system A, task processing system B, and task processing system C, respectively, in the current pending stage. For example, it is further assumed that in the pending stage, task processing system B needs to execute task b depending on a processing result of task processing system A, and task processing system C does not depend on a processing result of any other task processing system. In such case, the task scheduling system may first allocate processing threads to task a and task c, respectively, then estimate a load on each processing thread in the processing unit after completing task a, and accordingly allocate a processing thread to task b.

As described above, the software operating platform further has entities corresponding to virtual elements in the game, and the entities have component data. The component data is configured to describe functional attributes of the virtual elements corresponding to the entities. The component data of each entity is labelled with an identity document (ID) of the entity. In the software operating platform based on such architecture, when generating the task, the target task processing system further needs to determine an entity, which is related to its task, as a task entity according to the component data of each entity in the software operating platform, and transmit the ID of the task entity to the task scheduling system. Correspondingly, after allocating the processing thread to the task transmitted from the target task processing system, the task scheduling system further needs to transmit the ID of the task entity to the allocated processing thread, such that the processing thread is capable to acquire the component data of the task entity based on the ID and execute the task. The entity may have component data of one or more types, which is not limited herein.

As an example, it is assumed that a target task processing system is a task processing system for implementing a moving function. When generating the task, the target task processing system traverses the entities in the software operating platform to determine an entity having component data related to the moving function as the task entity, and transmits the ID of the task entity to the task scheduling system via the corresponding API. After allocating the processing thread to the task transmitted from the target task processing system, the task scheduling system may provide the ID of the task entity, which is transmitted from the target task processing system, for the allocated processing thread. Therefore, when executing the ask, the processing thread can determine the component data, which serves a basis for executing the task, according to the ID of the task entity, and implements the moving function of the virtual element corresponding to the task entity based on the component data related to the moving function. For example, the processing thread may determine a position of the virtual element corresponding to the task entity after the movement.

When determining the task entity, the target task processing system traverses all entities in the software operating platform. All entities in the software operating platform, which are related to the task to be processed by the target task processing system, serve as the task entities.

In practice, the target task processing system may transmit the ID of the task entity and the task simultaneously to the task scheduling system, may transmit the ID of the task entity after transmitting the task, or may transmit the ID of the task entity before transmitting the task. A sequence of transmitting the task and transmitting the ID of the task entity is not limited herein.

In the software operating platform based on the ECS architecture, component data required to be processed in the task is determined through the foregoing process, and the task is executed based on the determined component data. Integrity of task execution is ensured, and the component data in a software operating platform is flexibly called, and the virtual element corresponding to the entity is flexibly controlled.

In embodiments of the present disclosure (including the embodiments of both the claims and the specification), when being registered in the software operating platform, the task processing system is further configured with a priority. Generally, the priority is determined based on a degree of importance of the task to be processed by the task processing system, and/or a processing resource to be occupied by the task to be processed by the task processing system. Thereby, when allocating the processing thread to the task transmitted from the target task processing system, the task scheduling system may allocate the processing thread in the processing unit to the task based on the load of each processing thread in the processing unit, the priority corresponding to the target task processing system, and the operating correlation of the target task processing system in the pending stage.

When being registered in the software operating platform, the task processing system is configured with the priority according to the degree of importance of the task to be processed by the task processing system, and/or the processing resource to be occupied by the task to be processed by the task processing system. The more important the task to be processed by the task processing system is, or the more processing resources the task requires to occupy, the higher the priority of the task processing system is.

As an example, in the software operating platform, the task processing system for executing the rendering task generally consumes more processing resources when executing the rendering task, and the rendering task is important for overall operation of the game. Therefore, the task processing system for executing the rendering task has a high priority. A task processing system for processing a particle effect and a task processing system for processing a sound effect usually consume less processing resources when executing these tasks, and the particle effect and the sound effect are less important for overall implementation of the game. Therefore, the task processing system for processing the particle effect and the task processing system for processing the sound effect each has a lower priority. It is appreciated that the foregoing manner of setting priorities of the task processing systems is merely exemplary. In practice, the task processing systems are configured with priorities according to an actual operating condition of the software operating platform. A manner of setting priorities is not limited herein.

In the case that the task processing systems in the software operating platform are configured with the priorities are configured, the task scheduling system needs to refer further to the respective priorities of the target task processing systems when allocating the processing threads for the tasks transmitted from the target task processing systems. For example, a processing thread having a better performance and/or occupying fewer resources is allocated to a task transmitted from a target task processing system having a higher priority.

As an example, the processing unit is a heterogeneous multi-core processing unit. The task scheduling system allocates the processing thread which operates on a best core in the processing unit to the task transmitted from the target task processing system having the priority higher than a first preset level. The best core refers to a core having a highest processing performance in the processing unit.

At present, the processing units in various terminal devices (for example, a mobile terminal) comprise cores having different scales or different frequencies. In order to make the method for scheduling the task more adaptable to the mobile terminals, when allocating the processing threads to the tasks transmitted from the task processing systems, the task scheduling system may keep an important task being executed on a core having better processing performances in the processing unit, and may distribute a less important task to a core having ordinary processing performances in the processing unit.

Accordingly the first preset level may be determined in advance. The task to be processed by the task processing system having a priority higher than the first preset level is determined to be a task having a high degree of importance, and the task to be processed by the task processing system having a priority not higher than the first preset level is determined to be a task having a low degree of importance. When receiving the task transmitted from the task processing system having the priority higher than the first preset level, the task scheduling system allocates the processing thread which operates on the best core in the processing unit (i.e., the core having the best performance in the processing unit) to the task. As an example, when receiving a rendering task transmitted from the task processing system for processing the rendering task, the task scheduling system keeps the rendering task being executed on the processing thread which operates on the best core. Contrarily, when receiving the task transmitted from the task processing system having the priority not higher than the first preset level, the task scheduling system allocates the processing thread operates on a core other than the best core in the processing unit to the task. As an example, when receiving a particle-effect processing task transmitted from the task processing system for processing the particle effect, the task scheduling system distributes the particle-effect processing task to the processing thread which operates on the core having the ordinary performance.

In the case that the processing performances of cores in the processing unit is more diverse, task processing systems in the software operating platform may be configured with more diversified priorities, and more ranges delimited by levels are set in correspondence to the cores having different processing performances. The task transmitted from the task processing system is distributed to a processing core according to a range in which the priority of the task processing system is located.

Thereby, a task scheduling scheme adaptive to the heterogeneous multi-core processing unit is implemented. It is ensured that important tasks are executed on cores having better processing performances in the processing unit, so that the operation of the game is more stable.

As an example, the processing unit is a homogeneous multi-core processing unit. The task scheduling system may determines a processing thread, of which an occupancy rate satisfies a preset condition, in the processing unit as a preferable processing thread according to the load on each processing thread in the processing unit. Accordingly, the task scheduling system allocates the preferable processing thread to the task transmitted from the target task processing system having a priority higher than a second preset level.

At present, the processing units in various terminal devices (for example, a personal computer) comprise cores having same scales and same frequencies. When the software operating platform according to an embodiment of the present disclosure runs in the computers, the task scheduling system may allocate processing threads in the processing unit to the tasks generated by the task processing systems based on a principle of balancing loads in the processing unit. The task scheduling system may allocate the processing thread having low occupancy in the processing unit to the task transmitted from the task processing system having a high priority.

Accordingly, the second preset level may be determined in advance. The task to be processed by the task processing system having a priority higher than the second preset level is determined to be a task having a high degree of importance. The task to be processed by the task processing system having a priority not higher than the second preset level is determined to be a task having a low degree of importance.

When allocating the processing threads to the tasks transmitted from the target task processing systems, the task scheduling system first determines the processing thread of which the occupancy rate satisfies the preset condition, in the processing unit on which the game is capable to operate, as the preferable processing thread according to the load on each processing thread in the processing unit. Herein the occupancy rate being lower than a preset threshold may serve as the preset condition. Alternatively, the occupancy rates of the processing threads in the processing unit may be sequenced in an ascending order, and the processing thread(s) at head position(s) of the sequence are determined to satisfy the preset condition. The preset condition is not limited herein. Accordingly, the determined preferable processing thread is allocated to the task of the target task processing system having the priority higher than the second preset level.

Thereby, a task scheduling scheme adaptive to the homogeneous multi-core processing unit is implemented. It is ensured that important tasks are distributed to processing threads having rich processing resources in the processing unit, so that the operation of the game is more stable.

In practice, the task to be processed by the task processing system may comprise multiple sub-tasks which are correlated. That is, the task transmitted by each target task processing system to the task scheduling system may comprise multiple sub-tasks and executing correlations corresponding to the sub-tasks, respectively. Herein the executing correlation is configured to indicate dependency a corresponding sub-task upon execution of other sub-task(s) in the task. In such case, the task scheduling system allocates the processing thread to the task as well as to the sub-task in the task through a following manner.

A processing thread set is allocated to the task transmitted from each target task processing system based on the load of each processing thread in the processing unit and the operating correlation of the target task processing system in the pending stage. A processing thread in the processing thread set is allocated to each sub-task in the task based on the load on each processing thread in the processing thread set corresponding to the task and the executing correlation of each sub-task.

As an example, the task generated by the target task processing system actually comprises sub-tasks that are correlated. The target task processing system transmitting its generated task to the task scheduling system is actually the target task processing system transmitting the sub-tasks in its generated task and the executing correlations corresponding to the sub-tasks to the task scheduling system. Herein the executing correlation corresponding to the sub-task indicates dependency upon execution of other sub-task(s) in the task. For example, execution of sub-task 1 needs to depend on a processing result of executing sub-task 2, and accordingly the executing correlation corresponding to sub-task 1 may be generated.

When allocating the processing threads, the task scheduling system may first allocate a processing thread set to each received task at the game-engine level. The allocated processing thread set may comprise one or more processing threads. Allocating the processing thread sets to the tasks in the software operating platform level is essentially the same as allocating the processing threads to the tasks in the foregoing description, and hence details may refer to the relevant foregoing description and are not repeated herein.

After allocating the processing thread sets to the tasks, the task scheduling system further allocates the processing thread to each sub-task in the task at a task level. In embodiments of the present disclosure (including the embodiments of both the claims and the specification), the task scheduling system allocates the processing threads to the sub-tasks of the task according to the corresponding executing correlations of the sub-tasks in the task as well as a current load on each processing thread in the processing thread set corresponding to the task. For example, it is assumed that a task comprises sub-task 1, sub-task 2, and sub-task 3, execution of sub-task 2 needs to depend on a processing result of executing sub-task 1, and sub-task 3 can be executed independently without depending on a processing result of executing any other sub-task. In such case, the task scheduling system may first allocate processing threads to sub-task 1 and sub-task 3, respectively, then estimate a load on each processing thread in the processing thread set after completing sub-task 1, and accordingly allocate a processing thread to sub-task 2.

Thereby, two-level allocation of processing resources is implemented on the game-engine level and the task level. It is ensured that not only the processing resources are reasonably allocated to each task to be processed, but also reasonably allocated to each sub-task in the task. That is, the processing resources are allocated reasonably and more finely, which improves processing unit parallelism further.

In embodiments of the present disclosure (including the embodiments of both the claims and the specification), each sub-task in the task further has a corresponding priority. That is, when generating the task, the target task processing system configures priorities of the sub-tasks according to respective degrees of importance of the sub-tasks in the task, and/or respective processing resources to be occupied by the sub-tasks in the task. In this case, when allocating the processing threads to the sub-tasks in the task, the task scheduling system determines a processing thread having the lowest occupancy rate in a processing thread set according to the load one each processing thread in the processing thread set corresponding to the task. Accordingly, the task scheduling system allocates the processing thread having the lowest occupancy rate to the sub-task having a priority higher than a third preset level.

When generating the task, the target task processing system sets the priority for each sub-task in the task according to the degrees of importance of the sub-task, and/or the processing resources to be occupied by the sub-task. The higher the degree of importance of the sub-task is, or the more the processing resources the sub-task requires to occupy, the higher the priority of the sub-task is. In the case that the priorities are set the sub-tasks in the task, the task scheduling system further needs to refer to the respective priority of each sub-task when allocating the processing threads to the sub-tasks in the task. For example, the processing thread having lower resource occupancy in the processing thread set is allocated to the sub-task having a higher priority.

Accordingly, the third preset level may be determined in advance. The sub-task having the priority higher than the third preset level is determined to be the sub-task having a high degree of importance. The sub-task having the priority not higher than the third preset level is determined to be the sub-task having a low degree of importance. When allocating the processing threads to the sub-tasks in the task, the task scheduling system determines the processing thread having the lowest occupancy rate in the processing thread set according to the load on each processing thread in the processing thread set corresponding to the task. Accordingly, the processing thread having the lowest occupancy rate is allocated to the sub-task having the priority higher than the third preset level.

Thereby, a scheme of allocating processing resources in the task level is further optimized, such that an important sub-task is executed on a processing thread having low occupancy. It is ensured that a task can be well executed.

The method for scheduling the task provides a means of scheduling processing resources in a game-engine level. That is, for each task processing stage involved in operation of a game, correlation among the tasks which the software operating platform generates in such task processing stage is comprehensively considered, and accordingly the processing resources are allocated to the tasks in a reasonable manner. The method according to embodiments of the present disclosure is applicable to software operating platforms constructed based on the entity-component-system (ECS) architecture. In these software operating platforms, processing logics in a game are decoupled, and different tasks are executed by independent task processing systems, respectively. Herein each task processing system in the software operating platform is configured with the task processing stage, to which such task processing system is applicable, and the operating correlation in the task processing stage. Moreover, the additional task scheduling system is provided for schedule processing resources globally in the software operating platform. In response to operation of the software operating platform entering a certain task processing stage, e.g., the target stage which is to be executed, the task scheduling system allocates the one or more processing threads in the processing unit to the task(s), which are generated by the target task processing system (s) applicable to such stage, according to the operating correlation(s) of the target task processing system(s), thereby implementing scheduling processing resources in the game-engine level. Thereby, the dependency between operation of one task processing system and operation of other task processing system(s) is comprehensively considered in the software operating platform to allocate processing resources, which implements the overall control on processing unit parallelism. The frame rate of the game is improved, and heating of the processing unit is reduced.

In order to further understanding the method for scheduling the task according to embodiments of the present disclosure, hereinafter an example of an overall method for scheduling a task is illustrated.

During operation of a game, multiple tasks are usually required to be executed within one frame. Thereby, process of handling a game frame is divided into three stages, i.e., a PreUpdate stage, an Update stage and a PostUpdate stage. Herein one or more stages, to which each task processing system in a software operating platform is applicable, among the three stages may be determined according to when such the task processing system processes a correspond task. Accordingly, a corresponding task processing stage is set for each task processing system. As an example, a task processing system for executing a script logic needs to execute some script logics (e.g., updating a position of an object, and playing an animation) in the PreUpdate stage corresponding to a game frame, and hence the task processing stage corresponding to such task processing system is determined to be the PreUpdate stage. As another example, a task processing system for executing a rendering task needs to execute a computation task, such as generating a rendering command and rendering clipping, in the Update stage corresponding to the game frame, and hence the task processing stage corresponding to the task processing system is determined to be the Update stage.

In each of the PreUpdate stage, the Update stage, and the PostUpdate stage, all task processing systems applicable to such stage may transmit their generated tasks to the task scheduling system via respective APIs, such that the task scheduling system can allocate processing threads in the processing unit to the generated tasks. In addition, the task generated by the task processing system may comprise multiple sub-tasks, and these sub-tasks may have dependency on each other, or may be executed arbitrarily. When generating the task, the task processing system may specify the executing correlations among the sub-tasks in the task, for example, specify a preceding sub-task and a succeeding sub-task among the sub-tasks. Thus, the task processing system can transmit the executing correlations among the sub-tasks to the task scheduling system.

Herein during a registration stage of each task processing system, operating correlation between such task processing system and other task processing system(s) may be configured for its task processing stage. That is, it is indicated whether the task processing system needs to process a task depending on a processing result of another task processing system. For example, in the corresponding task processing stage, the task processing system for executing the rendering task needs to depend on a processing result of a task processing system for executing a physics-computation task and a processing result of a task processing system for executing an animation task. Accordingly, the operating correlation of the task processing system for executing the rendering task can be configured. In addition, during the registration stage of each task processing system, a priority is set for the task processing system according to a degree of importance of the task to be processed by the task processing system, and/or a processing resource to be occupied by the task to be processed by the task processing system.

Thereby, after the task processing stage to which the task processing system in the software operating platform is applicable, the operating correlation in the task processing stage, and the priority are specified, the task scheduling system can distribute the tasks reasonably to corresponding processing threads based on a load of each processing threads in the processing unit, the priorities, and the operating correlations of the task processing systems. Herein during the operation of the game, the task scheduling system executes a stage of Build Execution Graph and a stage of Execute Task Graph periodically for each game frame in the game, so as to execute all game tasks in parallel, as shown in Figure 5.

In addition, a processing unit in a mobile terminal and a processing unit in a personal computer (PC) are different in architecture. The processing unit in the mobile terminal usually comprises multiple cores having different scales and different frequencies. Hence, the task scheduling system cannot simply distribute tasks to processing threads according to a principle of load balancing. Herein according to the priorities corresponding to the task processing systems, the task generated by the task processing system having a high priority is kept to be executed on a core having a good performance in the processing unit. For example, a rendering task is kept to be executed on a large-scale core in the processing unit, and a task concerning particles, a task concerning a sound effect, and the like may be executed on a small core having an ordinary performance. Thereby, a performance of the game on the mobile terminal can be further improved.

The tasks required to be executed can be reasonably distributed to the processing threads through the method for scheduling the task according to embodiments of the present disclosure, which ensures that a high overall utilization rate of the processing unit. Figure 6 illustrates occupancy of processing resources of a processing unit when a software operating platform operates according to a method for scheduling a task according to an embodiment of the present disclosure. Six horizontal stripes represent six different processing threads, respectively in the processing unit. Regions shaded with vertical lines on each stripe represent that the processing thread corresponding to the stripe is utilized within time periods corresponding to these regions. Regions not shaded with vertical lines on each stripe represent that the processing thread corresponding to the stripe is not utilized in time periods corresponding to these regions. As shown in Figure 6, when task 1, task 2, task 3 and task 4 (each of which may be an independent task or may be a task set comprising multiple tasks) are executed, there are few regions not shaded the vertical lines on each stripe. It is indicated that the six processing threads in the processing unit are almost fully utilized, and an overall utilization rate of the processing unit is not lower than 70%.

A corresponding software operating platform is further provided according to embodiments of the present disclosure, in order to apply and implement the foregoing method for scheduling the task.

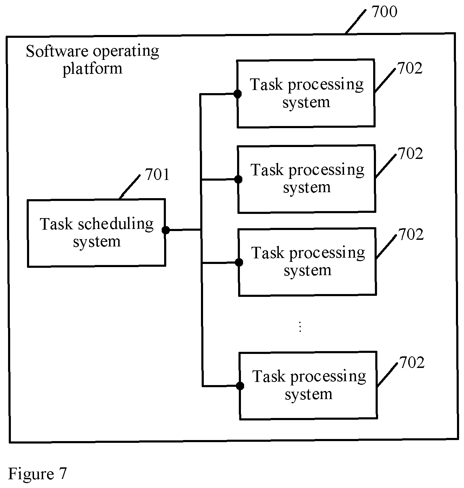

Reference is made to Figure 7, which is a structural block diagram of a software operating platform according to an embodiment of the present disclosure. As shown in Figure 7, a software operating platform 700 includes a task scheduling system 701 and multiple task processing systems 702. The task processing systems 702 are configured to process different tasks, respectively. Each task processing system 702 operates in a corresponding task processing stage. The operating correlation of each task processing system 702 indicates dependency upon operation of another task processing system 702.

Each task processing system 702 is configured to generate a task to be processed by such task processing system and transmit the task to the task scheduling system 701, in response to operation of the software operating platform entering the task processing stage corresponding to such task processing system.

The task scheduling system 701 is configured to allocate a processing thread in a processing unit to the task transmitted from each target task processing system based on a load on each processing thread and the operating correlation of each target task processing system in the pending stage, in response to operation of the software operating platform entering a pending stage. Each target task processing system is one of the task processing systems of which the task processing stage comprises the pending stage.

In embodiments of the present disclosure (including the embodiments of both the claims and the specification), on a basis of the software operating platform as shown in Figure 7, the software operating platform further comprises multiple entities, each entity has component data, and the component data of each entity is labelled with an identifier of such entity.

Each task processing system 702 is further configured to determine an entity related to the task to be processed by such task processing system according to the component data of the entity, and transmit the identifier of the entity to the task scheduling system 701, in response to operation of the software operating platform entering the task processing stage corresponding to such task processing system.

The task scheduling system 701 is further configured to transmit the identifier of a task entity to the processing thread after allocating the processing thread to the task transmitted from each target task processing system to enable the processing thread to acquire the component data of the task entity based on the identifier of the task entity to execute the task, where the task entities is the entity related to the task to be processed by such target task processing system.

In embodiments of the present disclosure (including the embodiments of both the claims and the specification), on a basis of the software operating platform as shown in Figure 7, a priority is set for each task processing system 702.

The task scheduling system 701 is configured to allocate the processing thread in the processing unit to the task transmitted from each target task processing system based on the load on each processing thread, the priority of each target task processing system, and the operating correlation of each target task processing system in a pending stage, in response to operation of the software operating platform entering the pending stage.

In embodiments of the present disclosure (including the embodiments of both the claims and the specification), the processing unit is a heterogeneous multi-core processing unit, the task scheduling system 701 is configured to allocate a processing thread, which operates on a best core, among the processing threads in the processing unit to the task transmitted from the target task processing system of which the priority is higher than a first preset level, where the best core is a core having a highest processing performance in the processing unit.

In embodiments of the present disclosure (including the embodiments of both the claims and the specification), the processing unit is a homogeneous multi-core processing unit, the task scheduling system 701 is configured to: determine a processing thread, of which an occupancy rate satisfies a preset condition, among the processing threads in the processing unit as a preferable processing thread according to the load on each processing thread in the processing unit; and allocate the preferable processing thread to the task transmitted from the target task processing system of which the priority is higher than a second preset level.

In embodiments of the present disclosure (including the embodiments of both the claims and the specification), the priority is determined based on one or both of: a degree of importance of the task to be processed by such task processing system, and a processing resource required to be occupied by the task to be processed by such task processing system.

In embodiments of the present disclosure (including the embodiments of both the claims and the specification), on a basis of the software operating platform as shown in Figure 7, the task to be processed by each task scheduling system comprises multiple sub-tasks and executing correlation corresponding to each sub-task, where the executing correlation indicates dependency of such sub-task upon execution of another sub-task in the task. The task scheduling system 701 is specifically configured to: allocate a processing thread set to the task transmitted from each target task processing system based on the load on each processing thread in the processing unit and the operating correlation of each target task processing system in the pending stage; and allocate a processing thread in the processing thread set to each sub-task in the task based on the load on each processing thread in the processing thread set and the executing correlation of each sub-task.

In embodiments of the present disclosure (including the embodiments of both the claims and the specification), the task to be processed by each task scheduling system further comprises a priority of each sub-task. The task scheduling system 701 is configured to: determine a processing thread, of which an occupancy rate is lowest among the processing thread set, according to a load on each processing thread in the processing thread set; and allocate the processing thread to a sub-task of which the priority is higher than a third preset level, among the sub-tasks.

In embodiments of the present disclosure (including the embodiments of both the claims and the specification), on a basis of the software operating platform as shown in Figure 7, the task processing stage is delimited through dividing a process of handling a game frame, and is among a pre-update stage, an update stage, and a post-update stage corresponding to the game frame. A task of preparation required for updating the game frame is executed in the pre-update stage, a task of updating the game frame is executed in the update stage, and a task of finishing operation after updating the game frame is executed in the post-update stage.

In embodiments of the present disclosure (including the embodiments of both the claims and the specification), on a basis of the software operating platform as shown in Figure 7, each task processing systems 702 is configured to generate the task to be processed by such task processing system and transmit the task to the task scheduling system 701 via an API.

The foregoing apparatus for scheduling the task provides a means of scheduling processing resources in a game-engine level. That is, for each task processing stage involved in operation of a game, correlation among the tasks which the software operating platform generates in such task processing stage is comprehensively considered, and accordingly the processing resources are allocated to the tasks in a reasonable manner. The method according to embodiments of the present disclosure is applicable to software operating platforms constructed based on the entity-component-system (ECS) architecture. In these software operating platforms, processing logics in a game are decoupled, and different tasks are executed by independent task processing systems, respectively. Herein each task processing system in the software operating platform is configured with the task processing stage, to which such task processing system is applicable, and the operating correlation in the task processing stage. Moreover, the additional task scheduling system is provided for schedule processing resources globally in the software operating platform. In response to operation of the software operating platform entering a certain task processing stage, e.g., the target stage which is to be executed, the task scheduling system allocates the one or more processing threads in the processing unit to the task(s), which are generated by the target task processing system (s) applicable to such stage, according to the operating correlation(s) of the target task processing system(s), thereby implementing scheduling processing resources in the game-engine level. Thereby, the dependency between operation of one task processing system and operation of other task processing system(s) is comprehensively considered in the software operating platform to allocate processing resources, which implements the overall control on processing unit parallelism. The frame rate of the game is improved, and heating of the processing unit is reduced.

A device is further provided according to an embodiment of the present disclosure for implementing the method for scheduling the task. Specifically, the device may be a terminal device. Hereinafter the terminal device is described from a perspective of hardware implementation.

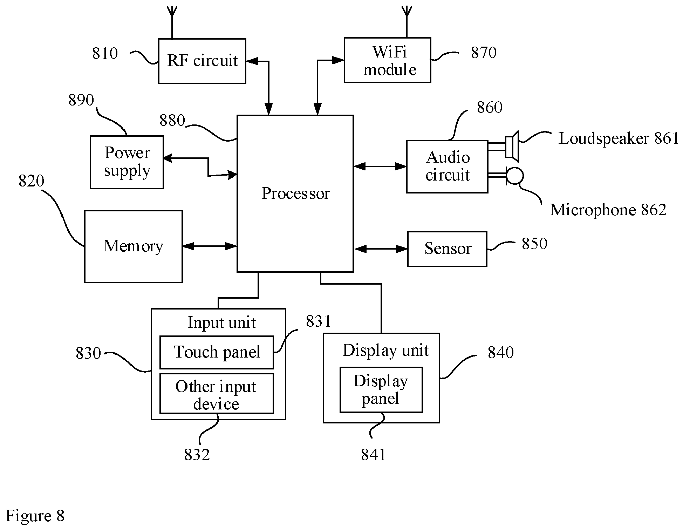

Reference is made to Figure 8, which is a structural block diagram of a terminal device according to an embodiment of the present disclosure. In order to facilitate illustration, what is depicted in Figure 8 is only a part related to embodiments of the present disclosure. Specific technical details which are not depicted may refer to the foregoing method embodiments. The terminal device may be an arbitrary terminal device including a mobile phone, a tablet computer, a personal digital assistant (PDA), a point of sales (POS), and a vehicle-mounted computer. A computer is taken as an example of the terminal device.

Figure 8 shows a block structural diagram of a part of a computer related to a terminal device according to an embodiment of the present disclosure. As shown in Figure 8, the smartphone comprises components such as a radio frequency (RF) circuit 810, a memory 820, an input unit 830 (which includes a touch panel 831 and another input device 832), a display unit 840 (which includes a display panel 841), a sensor 850, an audio circuit 860 (which may be connected with a speaker 861 and a microphone), a wireless fidelity (WiFi) module 870, a processor 1180, and a power supply 1190. A person skilled in the art can understand that the structure of the mobile phone as shown in Figure 8 does not constitute a limitation on the mobile phone. The mobile phone may comprise more or fewer components than what is depicted in the figure, some of the components may be combined, or the components may have different arrangement.

The memory 820 may be configured to store a software program and a software module. The processor 880 runs the software program and the software module stored in the memory 820, so as to implement various functional applications and data processing of the smartphone. The memory 820 may mainly comprise a program storing region and a data storing region. The program storing region may store an operating system, an application program required by at least one function (for example, a sound playing function and an image playing function), or the like. The data storing area may store data (such as audio data and an address book), which are created according to application of the smartphone. In addition, the memory 820 may include a high speed random access memory, and may include a non-volatile memory, such as at least one magnetic disk storage device, a flash memory, or another volatile solid-state storage device.

The processor 880 is a control core of the smartphone, and is connected to various parts of the entire smartphone via various interfaces and lines. The processor 880 runs or executes the software program and/or the software module stored in the memory 820, and invokes data stored in the memory 820, so as to implement various functions of the smartphone and performs data processing, and thereby monitors the entire smartphone. Optionally, the processor 880 may include one or more processing units. Preferably, an application processor and a modem may be integrated in the processor 880 may integrate. The application processor is mainly configured to operate an operating system, a user interface, an application program, and the like. The modem mainly is mainly configured to operate wireless communication. The foregoing modem may be alternatively not integrated into the processor 880.

Herein the processor 880 in the terminal device further has a following function.

The processor 880 is capable to operate a software operating platform. The software operating platform comprises a task scheduling system and task processing systems. The task processing systems are configured to process different tasks, respectively. Each task processing system operates in a corresponding task processing stage. The operating correlation of each task processing system indicates dependency upon operation of another task processing system in the software operating platform.

In response to operation of the software operating platform entering a pending stage, each target task processing system generates a task which is to be processed by such target task processing system, and transmits the task to the task scheduling system. Each target task processing systems is the task processing system of which the task processing stage comprises the pending stage.

The task scheduling system allocates processing thread(s) in a processing unit to the task transmitted from each target task processing system based on a load on each processing thread in the processing unit and the operating correlation of each target task processing system in the pending stage.

In embodiments of the present disclosure (including the embodiments of both the claims and the specification), the processor 880 is further configured to execute steps of any method in the foregoing embodiments.

A computer-readable storage medium is further provided according to an embodiment of the present disclosure. The computer-readable storage medium stores a computer program. The computer program is configured to implement steps of any method in the foregoing embodiments.

A computer program product or a computer program is further provided according to an embodiment of the present disclosure. The computer program product or the computer program comprises computer instructions stored in a computer-readable storage medium. A processor of a computer device reads the computer instructions from the computer-readable storage medium and executes the computer instruction to enable the computer device to perform steps of any method in the foregoing embodiments.

In order to facilitate concise description, specific operation of the foregoing system, apparatus, or unit may refer to a corresponding process in the foregoing method embodiments. Details are not repeated herein.

In several embodiments of the present disclosure, the disclosed system, apparatus, and method may be implemented in other manners. For example, the described apparatus embodiments are only exemplary. For example, the division of the units is only based on logical functions and there may be another manner of division in practice. For example, multiple units or components may be combined or integrated into another system, or some features may be ignored or not performed. In addition, the shown or discussed mutual couplings, direct couplings, or communication connections may be implemented through some interfaces. The indirect couplings or communication connections among apparatuses or units may be electrical, mechanical, or implemented in other forms.

The units described as separate parts may or may not be physically separate. Parts displayed as units may or may not be physical units, and may be located in one position or distributed among network units. Some or all of the units may be selected according to an actual requirement to achieve an objective of the solutions according to embodiments.

In addition, function units in embodiments of the present disclosure may be integrated into one processing unit. Each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such understanding, all or a part, which contributes to the related art in essence, of the technical solutions of the present disclosure may be implemented in a form of a software product. The computer software product is stored in a storage medium, and comprises several instructions for instructing a computer device (which may be a personal computer, a server, a network device, or the like) to perform all or some of the steps of the method according to embodiments of the present disclosure. The foregoing storage medium includes any medium that can store program codes, such as a USB flash drive, a removable hard disk, a read only memory (ROM), a random access memory (RAM), a magnetic disk, or an optical disc.

Herein the term "at least one" means one or more, and the term "multiple" means two or more. The term "and/or" describes association between objects, and represents three possible relationships. For example, "A and/or B" may indicate three cases, i.e., only A exists, only B exists, and both A and B exist, where A and B each may be singular or plural. The symbol "/" generally indicates an "or" relationship between the associated objects. The term "at least one of the following items" or a similar expression means any combination of these items, including single item or any combination formed by multiple items. For example, "at least one of a, b or c" may represent a, b, c, "a and b", "a and c", "b and c", or "a and b and c", where each of a, b, and c may be singular or plural.

The foregoing embodiments are merely intended for describing the technical solutions of the present disclosure, and not for limiting the present disclosure. Although the present disclosure is described in detail with reference to the foregoing embodiments, a person skilled in the art can appreciate that modifications may be made to the technical solutions described in the foregoing embodiments, or equivalent replacements may be made to a part of the technical features of the technical solutions. These modifications or replacements would not make the essence of corresponding technical solutions depart from the spirit and scope of the technical solutions in embodiments of the present disclosure.

## Claims

1. A method for scheduling a task, executable by a terminal device on which a software operating platform is capable to run, wherein:
the software operating platform comprises a task scheduling system and a plurality of task processing systems, the task processing systems are configured to process different tasks, respectively, each of the task processing systems operates in a corresponding task processing stage, and operating correlation of each of the task processing systems indicates dependency upon operation of another of the task processing systems, and
the method comprises: in response to operation of the software operating platform entering a target stage which is to be executed,
generating, by each of one or more target task processing systems, a task which is to be processed by said target task processing system, and transmitting, by each of one or more target task processing systems, the task to the task scheduling system, wherein each of the one or more target task processing systems is one of the task processing systems of which the task processing stage comprises the target stage; and
allocating, by the task scheduling system, one or more of processing threads in a processing unit to the task transmitted from each of the one or more target task processing systems based on a load on each of the processing threads and the operating correlation of each of the one or more target task processing systems in the target stage.

2. The method according to claim 1, wherein the software operating platform further comprises entities, each of entities has component data labelled with an identifier of such entity, and the method further comprises:
for each of the one or more target task processing systems,
determining, by said target task processing system, a task entity which is related to the task among the entities according to the component data of the entity;
transmitting, by said target task processing system, the identifier of the task entity to the task scheduling system; and
transmitting, by the task scheduling system after allocating the one or more of the processing threads to the task transmitted from said target task processing system, the identifier of the task entity to the one or more of the processing threads to enable the one or more of the processing threads to:
acquire the component data of the task entity based on the identifier of the task entity to execute the task.

3. The method according to claim 1 or 2, wherein a priority is set for each of the one or more task processing systems, and
allocating, by the task scheduling system, the one or more of the processing threads in the processing unit to the task transmitted from each of the one or more target task processing systems based on the load on each of the processing threads and the operating correlation of each of the one or more target task processing systems in the target stage comprises:
allocating, by the task scheduling system, the one or more of the processing threads to the task transmitted from each of the one or more target task processing systems based on the load on each of the processing threads, the priority of each of the one or more target task processing systems, and the operating correlation of each of the one or more target task processing systems in the target stage.

4. The method according to claim 3, wherein the processing unit is a heterogeneous multi-core processing unit, and
allocating, by the task scheduling system, the one or more of the processing threads to the task transmitted from each of the one or more target task processing systems based on the load on each of the processing threads, the priority of each of the one or more target task processing systems, and the operating correlation of each of the one or more target task processing systems in the target stage comprises:
allocating a processing thread, which operates on a best core, among the processing threads to the task transmitted from one of the target task processing systems, of which the priority is higher than a first preset level, wherein the best core is a core having a highest processing performance in the processing unit.

5. The method according to claim 3, wherein the processing unit is a homogeneous multi-core processing unit, and
allocating, by the task scheduling system, the one or more of the processing threads to the task transmitted from each of the one or more target task processing systems based on the load on each of the processing threads, the priority of each of the one or more target task processing systems, and the operating correlation of each of the one or more target task processing systems in the target stage comprises:
determining a processing thread, of which an occupancy rate satisfies a preset condition, among the processing threads as a preferable processing thread according to the load on each of the processing threads; and
allocating the preferable processing thread to the task transmitted from one of the target task processing systems, of which the priority is higher than a second preset level.

6. The method according to claim 3, wherein the priority of each of the one or more target task processing systems is determined based on one or both of:
a degree of importance of the task to be processed by said target task processing system, and
a processing resource required to be occupied by the task to be processed by said target task processing system.

7. The method according to claim 1 or 2, wherein:
the task to be processed by each of the one or more target task scheduling systems comprises sub-tasks and executing correlation of each of the sub-tasks, and the executing correlation of each of the sub-tasks indicates dependency upon execution of another sub-task in the task; and
allocating, by the task scheduling system, the one or more of the processing threads in the processing unit to the task transmitted from each of the one or more target task processing systems based on the load on each of the processing threads and the operating correlation of each of the one or more target task processing systems in the target stage comprises:
allocating a processing thread set to the task transmitted from each of the one or more target task processing systems based on the load on each of the processing threads and the operating correlation of each of the one or more target task processing system in the target stage; and
for each of the one or more target task processing systems,
allocating a processing thread in the processing thread set to each of the sub-tasks based on the load on each processing thread in the processing thread set and the executing correlation of each of the sub-tasks.

8. The method according to claim 7, wherein:
the task to be processed by each of the one or more target task scheduling systems further comprises a priority of each of the sub-tasks; and
allocating, by the task scheduling system, the one or more of the processing threads in the processing unit to the task transmitted from each of the one or more target task processing systems based on the load on each of the processing threads and the operating correlation of each of the one or more target task processing systems in the target stage comprises:
for each of the one or more target task processing systems,
determining a processing thread, of which an occupancy rate is lowest among the processing thread set, according to the load on each processing thread in the processing thread set; and
allocating the processing thread, of which the occupancy rate is lowest among the processing thread set, to a sub-task, of which the priority is higher than a third preset level, among the sub-tasks.

9. The method according to claim 1 or 2, wherein:
the task processing stage is delimited through dividing a process of handling a game frame, and is among a pre-update stage, an update stage, and a post-update stage for the game frame;
a task of preparation required for updating the game frame is executed in the pre-update stage;
a task of updating the game frame is executed in the update stage; and
a task of finishing operation after updating the game frame is executed in the post-update stage.

10. The method according to claim 1 or 2, wherein transmitting, by each of one or more target task processing systems, the task to the task scheduling system comprises:
transmitting, by each of one or more target task processing systems, the task to the task scheduling system via an application programming interface.

11. A software operating platform, configured to run on a terminal device and comprising a task scheduling system and task processing systems, wherein:
the task processing systems are configured to process different tasks, respectively, each of the task processing systems operates in a corresponding task processing stage, and operating correlation of each of the task processing systems indicates dependency upon operation of another of the task processing systems;
each of the task processing systems is configured to generate a task to be processed by said task processing system and transmit the task to the task scheduling system, in response to operation of the software operating platform entering the task processing stage corresponding to said task processing system;
the task scheduling system is configured to allocate one or more of processing threads in a processing unit to the task transmitted from each of one or more target task processing systems based on a load on each of the processing threads and the operating correlation of each of the one or more target task processing systems in a stage which is to be executed, in response to operation of the software operating platform entering the target stage, wherein each of the one or more target task processing systems is one of the task processing systems of which the task processing stage comprises the target stage.

12. The software operating platform according to claim 11, wherein the software operating platform further comprises entities, each of the entities has component data labelled with an identifier of said entity;
each task processing system is further configured to determine an entity, which is related to the task to be processed by said task processing system, among the entities according to the component data of the entity, and transmit the identifier of the entity to the task scheduling system, in response to the operation of the software operating platform entering the task processing stage corresponding to said task processing system; and
for each of the one or more target task processing systems,
the task scheduling system is further configured to transmit the identifier of a task entity to the one or more of the processing threads, after allocating the one or more of the processing threads to the task transmitted from said target task processing system, to enable the one or more of the processing threads to:
acquire the component data of the task entity based on the identifier of the task entity to execute the task,
wherein the task entity is the entity related to the task to be processed by said target task processing system.

13. The software operating platform according to claim 11 or 12, wherein a priority is set for each task processing system; and
the task scheduling system is configured to allocate the one or more of the processing threads to the task transmitted from each of the one or more target task processing systems based on the load on each of the processing threads, the priority of each of the one or more target task processing systems, and the operating correlation of each of the one or more target task processing systems in the target stage, in response to the operation of the software operating platform entering the target stage.

14. The software operating platform according to claim 13, wherein the processing unit is a heterogeneous multi-core processing unit, and the task scheduling system is configured to:
allocate a processing thread, which operates on a best core, among the processing threads to the task transmitted from one of the target task processing systems, of which the priority is higher than a first preset level, wherein the best core is a core having a highest processing performance in the processing unit.

15. A device, comprising a processor and a memory, wherein:
the memory stores a computer program; and
the processor is configured to execute the computer program to implement the method according to any one of claims 1 to 10.

16. A computer-readable storage medium, configured to store a computer program, wherein the computer program is configured to implement the method according to any one of claims 1 to 10.

17. A computer program product, wherein computer program product when executed by a processor implements the method according to any one of claims 1 to 10.
